# EUROPEAN PATENT APPLICATION

(11) **EP 4 764 969 A1**
(43) Date of publication of application: **24.06.2026**
(21) Application number: 24383428.0
(22) Date of filing: 20.12.2024
(51) Int. Cl.: G06N 10/20, G06N 10/40

(54) **SYSTEM, METHOD AND COMPUTER PROGRAM PRODUCT FOR QUANTUM COMPUTING**

(71) Applicant: Multiverse Computing S.L., 20014 Donostia - San Sebastian, Guipuzcoa (ES)
(72) Inventor: PATRA, Siddhartha, 20014 Donostia-San Sebastián Gipuzkoa (ES); SINGH, Sukhbinder, 20014 Donostia-San Sebastián Gipuzkoa (ES); JAHROMI, Saeed, 20014 Donostia-San Sebastián Gipuzkoa (ES); ORÚS, Román, Toronto, Ontario, M5T 3A4 (CA)
(74) Representative: Balder IP Law, S.L.

(57) **Abstract**

The disclosure relates to a quantum computing system comprising: a reservoir (101, 201) of quantum computational units (202, 203, 801), wherein the quantum computational units (202, 203, 801) are disposed in a non-lattice computational arrangement; means for computationally manipulating quantum computational units (202, 203, 801) of the reservoir (101, 201); means for enabling computational interaction between at least two quantum computational units (202, 203, 801) computationally manipulated; and a measurement means (105, 601) for measuring a quantum property of at least one of the at least two quantum computational units (202, 203, 801) after said computational interaction.

## Description

### TECHNICAL FIELD

The invention pertains to a quantum computing architecture and related method. It includes a quantum computational unit reservoir and means for interaction and readout.

### BACKGROUND

Quantum computing is a rapidly evolving field that leverages the principles of quantum mechanics to perform computations. Traditional quantum computing architectures typically place qubits on a fixed physical lattice, which forms the basis for the computation. Also, qubits are arranged in a computational lattice that form a quantum circuit, each qubit having a fixed number of connections with computationally adjacent neighbouring qubits, which can be physically adjacent neighbouring qubits or physically distant qubits.

Computationally adjacent neighbouring qubits can interact between each other by applying qubit gates, such as for example applying two-qubit SWAP gates, which exchange the state between the two qubits involved. Generally speaking, qubit gates (or control gates) refer to computational operations in quantum computing that manipulate a quantum property of a qubit, such as its state. Qubit gates can alter the probability amplitude of the qubit across multiple states, enabling quantum computation.

Different approaches have been disclosed in the prior art for optimizing the connectivity between adjacent qubits. For example, in the US patent US 11,321,625 B2, machine learning is used to optimize the connectivity of a quantum circuit comprising a predetermined number of physically fixed qubits in a particular location within a quantum chip. This allows, for example, to remove a gate from the circuit when running a particular quantum computing algorithm, improving the circuit efficiency.

However, quantum circuits comprising qubits in a fixed physical location within the physical lattice are prone to decrease the efficiency of the quantum circuit proportionally to the number of qubits, due to the inevitable addition of gates needed to run a particular quantum algorithm.

Therefore, there is a need for improved quantum computing architectures and associated methods that can overcome these challenges.

### DESCRIPTION OF THE INVENTION

Considering the described challenges in the field, it is valuable to develop new quantum computing architectures and associated methods that reduce the computational complexity of the system executing a quantum algorithm routine, hence minimizing the number of implemented gates, also referred to as control gates, on the qubits. In quantum computing control gates are computational operations that manipulate a quantum property of a qubit. Control gates are well-known in the field of quantum computing and are out of the scope of the present disclosure. The present disclosure provides an architecture and method which allows to minimize the number of gates needed in a quantum circuit, hence, enhancing the coherence time of the qubits and minimizing gate-induced errors on the qubits.

From now on, in the context of the present disclosure, we refer to quantum computational units to mean the material elements (hardware) that can host qubits (a qubit being the logical component corresponding to a quantum computational unit).

In particular, a first aspect of the disclosure relates to a quantum computing system comprising: a reservoir of quantum computational units, wherein the quantum computational units are disposed in a non-lattice computational arrangement; means for computationally manipulating quantum computational units of the reservoir; means for enabling computational interaction between at least two quantum computational units computationally manipulated; and a measurement means for measuring a quantum property of at least one of the at least two quantum computational units after said computational interaction.

In the context of the present disclosure, the expressions lattice arrangement and non-lattice arrangement refer to the computational connectivity of each quantum computational unit within a reservoir, rather than to the physical location of each quantum computational unit in the reservoir. The lattice (or non-lattice) arrangement represents, from a computational point of view, the connectivity between quantum computational units and how they are logically organized to perform quantum computations. In other words, the quantum computational units being in a non-lattice computational arrangement implies that the potential computational connections for performing operations between two or more quantum computational units are not defined within the reservoir, irrespective of their physical location.

In the context of the present disclosure, computationally manipulating is to be understood as the computational selection (that is to say, selection for computational purpose) of particular quantum computational units to be used in a quantum circuit. Said computational selection may involve a physical displacement of the position of the quantum computational units or may not involve such physical displacement.

In the context of the present disclosure, a quantum circuit refers to a set of quantum computational units and a computational connectivity established between each quantum computational unit and one or more other quantum computational units of the set of quantum computational units. A quantum circuit may perform logic operations implying the execution of a quantum algorithm routine. It is understood by quantum algorithm routine a sequence of computationally logic operations performed by a plurality of quantum computational units and their established computational connectivity.

The computational manipulation of quantum computational units of the reservoir results in the establishment of a quantum circuit formed by the selected quantum computational units and their computational connections.

The placement of quantum computational units on a physical location can pose computational challenges, in particular, when control gates are applied on quantum computational units that are not physically adjacent. This requires the addition of a large number of control gates, such as SWAP gates, to the quantum circuit. Control gates are computational operations that manipulate a quantum property of a quantum computational unit, such as its state. Control gates (i.e. SWAP gates) allow quantum computational units in the same circuit that are not physically adjacent to computationally interact through intermediate quantum computational units. This allows to execute logical operations between physically distant quantum computational units, even if the hardware connectivity is limited.

However, using many control gates in a quantum circuit increases the depth of the circuit, which leads to higher error rates, increased decoherence, reduced efficiency, and lower fidelity. These are critical disadvantages, particularly given the current limitations of quantum hardware in terms of noise, error rates, and qubit connectivity. Effective optimization strategies, such as quantum computational unit placement and the use of effective algorithms, aim to minimize the number of control gates in a quantum circuit. The present disclosure allows to minimize the number of required control gates to run a specific quantum algorithm routine.

In the context of the present disclosure, the expression computational interaction refers to an interaction between quantum computing units. This interaction implies executing a quantum computation and/or causing a change of a quantum property of at least one of the quantum computational units. Enabling computational interaction may involve a physical displacement of the position of the quantum computational units or may not involve such physical displacement. For example, it may involve physically approaching the quantum computational units into computational interaction distance, until a change is induced in a quantum property of at least one of the quantum computational units.

In embodiments, enabling computational interaction implies causing said computational interaction.

Non-limiting examples of a quantum property of a quantum computational unit are a wavefunction defining the state of a quantum computational unit, a quantum entanglement between two or more quantum computational units, an energy level of the state of a quantum computational unit or a spin of a quantum computational unit. Said quantum property may change after the computational interaction.

Therefore, measuring a quantum property of a quantum computational unit may be measuring the state of the quantum computational unit. A way of measuring or determining the state of a quantum computational unit may be by collapsing the wavefunction that defines the state of said unit.

The means for enabling computational interaction between at least two quantum computational units is configured for performing two-body gate operations (gate operations between two quantum computational units) on the at least two of the plurality of quantum computational units. In the context of the present disclosure, gate operations refer to logic operations performed on the quantum computational units using control gates. At the means for enabling computational interaction two or more computationally manipulated quantum computational units are brought into interaction proximity (not necessarily into physical proximity) such that an interaction between a quantum property associated to each quantum computational unit is produced.

In some embodiments, the means for computationally manipulating quantum computational units and the means for enabling computational interaction are the same means. In other embodiments, they are different means.

In some embodiments, the quantum computational units in the non-lattice computational arrangement in the reservoir are computationally disconnected from one another. By computationally disconnected it is understood that the quantum computational units in the reservoir do not have any computational connection with any other quantum computational units, either physically adjacent or not. This implies that a non-lattice computational arrangement of quantum computational units in the reservoir does not have a defined number of computational connections between other quantum computational units. A non-lattice computational arrangement also implies that a first quantum computational unit in the reservoir does not have a defined computational connection with which other quantum computational units said first quantum computational unit may interact with. In a non-lattice computational arrangement, the computational arrangement of the quantum computational units in the reservoir is not defined. Hence the connectivity of the quantum computational units in the reservoir is not defined. By computational connection it is understood that two or more quantum computational units are linked, irrespective of their physical location, such that they can perform logic operations during the execution of a quantum algorithm routine. It is understood as quantum algorithm routine a plurality of logic operations performed by a plurality of quantum computational units.

In some embodiments, the reservoir of quantum computational units is an ion trap. In this case, the quantum computational units in the reservoir are ions.

In other embodiments, the reservoir of quantum computational units is a surface of a substrate, such as a surface of a semiconductor or sapphire substrate. In this case, the quantum computational units in the reservoir are artificial atom-based devices, such as superconductor-based quantum devices, spin qubit devices or quantum dot devices. The reservoir may comprise a plurality of artificial atom-based devices stored in a non-lattice computational arrangement. One quantum computational unit may comprise one artificial atom-based device. Other known artificial atom-based devices may be used. In this embodiment, the reservoir is a surface of a substrate suitable to host artificial atom-based devices. Said artificial atom-based devices act as quantum computational units to be used during the execution of quantum algorithm routines.

In some embodiments, the physical location of the quantum computational units in the reservoir is known. This may be the case, for example, when the quantum computational units are artificial atom-based devices, such as a superconductor-based quantum device, a spin qubit device or a quantum dot device. In other embodiments, the physical location of the quantum computational units in the reservoir may not be known, for example, when the quantum computational units are ions.

The quantum computational units in the reservoir may be identified, extracted, manipulated, interacted, and/or measured in a controlled manner, irrespective of the quantum computational units being in a known physical location or not.

In some embodiments, when the quantum computational units are ions, the means for computationally manipulating quantum computational units can extract and/or physically manipulate quantum computational units of the reservoir.

In some embodiments, the non-lattice computational arrangement of the quantum computational units in the reservoir allows to define a particular computational connectivity after the quantum computational units are manipulated. This allows to define a posteriori, after the manipulation of the quantum computational units, a desired computational connectivity of quantum computational units. Said computational connectivity allows to optimize the number of computational connections between quantum computational units.

The optimization of the number of computational connections may be, for example, a minimization of redundant or undesired computational connections between quantum computational units. The computational connections may be controlled by control gates. For example, control gates, such as SWAP gates, between different quantum computational units are needed for computationally connecting non-neighbouring quantum computational units in a computational lattice arrangement. The minimization of redundant or undesired computational connections between quantum computation units increases the efficiency of the quantum circuit due to the reduction of losses or errors induced by control gates between quantum computational units.

In some embodiments, the computationally manipulated quantum computational units may be moved, caused to interact in pairs and/or measured in a manner that directly executes a desired quantum algorithm routine. A more efficient quantum computing system is thus proposed, which enables to optimize the execution of a quantum algorithm routine by the minimization of undesired computational connections (hence, minimizing errors) during the computation of said algorithm routine.

The geometry of the physical location of the quantum computation units in the reservoir may not resemble the geometry of the lattice arrangement generated with the computationally manipulated quantum computational units. Said specific lattice arrangement generated with the computationally manipulated quantum computational units is created by computationally connecting each quantum computational unit to other manipulated unit or units, according to a computational connection for executing a quantum algorithm routine. Hence, the physical location of quantum computational units may be different than the lattice computational arrangement defined by the computational connections between said quantum computational units.

In some embodiments, the physical location of the quantum computational units in the reservoir is disordered and/or unknown. The quantum computational units in the disordered and/or unknown physical location may be labelled and uniquely identified.

The physical location of the quantum computation units in the reservoir may correspond to the distribution of quantum computational units within a quantum processor. Said quantum computational units are located in the reservoir in a non-lattice computational arrangement, wherein one or more computational connections between at least two quantum computational units may be controllably defined after the computational manipulation of the quantum computational units of/from the reservoir.

The manipulated quantum computational units and the created computational connections between them, define a computational lattice arrangement. This computational lattice arrangement is generated a posteriori after the computational manipulation of quantum computational units of the reservoir. The physical location of the quantum computational units in the reservoir may be different than the physical location of the quantum computational units after being manipulated. The computational lattice arrangement of quantum computational units defines the computational connections between quantum computational units for computational purposes, specifying for a quantum computational unit which other quantum computational units it may be able to computationally interact with. Each computational connection is controlled by control gates, said control gates executing logic computational operations between computationally connected quantum computational units. After the computational manipulation of quantum computational units of the reservoir, the computational connections between quantum computational units may be determined in a way that the required computational connections between the quantum computational units is minimized.

When the reservoir of quantum computational units is an ion trap and the quantum computational units in the reservoir are ions, the reservoir may comprise a plurality of ions stored in a non-lattice computational arrangement. The ions act as quantum computational units to be used during the calculation of a quantum algorithm routine. Each quantum computational unit may comprise one ion.

Again referring to the case in which the quantum computational units are ions, in some embodiments the means for computationally manipulating quantum computational units comprises at least one of: electromagnetic fields and optical tweezers.

Again referring to the case in which the quantum computational units are ions, the ions may be brought into physical proximity such that the quantum property of an ion interacts with the quantum property of another ion. Therefore, in some embodiments the electromagnetic fields and/or optical tweezers are used to computationally manipulate ions, to enable computational interaction between ions and also to physically positioning ions at interaction distance.

When the reservoir of quantum computational units is a surface of a substrate and the quantum computational units are artificial atom-based devices, the artificial atom-based devices are disposed in a fixed physical position in the surface of the substrate. The artificial atom-based devices act as quantum computational units to be used during the calculation of a quantum algorithm routine.

When the quantum computational units are artificial atom-based devices, computational manipulation implies manipulating a quantum property of the artificial atom-based device, for example moving it from the device to another computationally connected device, without altering the quantum property.

Again referring to the case in which the quantum computational units are artificial atom-based devices, in some embodiments the means for computationally manipulating quantum computational units comprise electronic connections.

Again referring to the case in which the quantum computational units are artificial atom-based devices, whose physical location cannot be altered because the artificial atom-based devices are fixed as a solid state realization on the surface of a substrate, electronic connections can be created between artificial atom-based devices, such that the quantum property associated to each device can interact with another quantum property from a different device. In some embodiments the means for enabling computational interaction between at least two quantum computational units is therefore implemented by these electronic connections.

In embodiments involving electronic connections, the electronic connections may be configured to be modified according to a quantum circuit to be implemented by the extracted quantum computational units.

The means for enabling computational interaction between at least two quantum computational units may comprise additional devices or elements that enable the controlled interaction of quantum computational units and the controlled interaction of the quantum property associated with each quantum computational units. Said additional devices may be, for example, tunning lasers, tunning electronic gates, single photon emitters or temperature controllers.

In some embodiments, the manipulation of artificial atom-based devices is to be understood as the selection of a particular artificial atom-based device from the reservoir. Artificial atom-based devices may be defined on the surface of the substrate in a fixed physical location, however, the artificial atom-based devices are in a non-lattice computational arrangement, wherein the computational connectivity between each artificial atom-based device is not defined. The physical location of the artificial atom-based devices on the surface of the substrate is defined and remains fixed throughout the execution of the quantum algorithm routine. On the other hand, the computational manipulation of said artificial atom-based devices on the reservoir is to be understood as the selection of the artificial atom-based devices and computationally connection via electronic connections of the plurality of selected artificial atom-based devices. The electronic connections may computationally connect the plurality of artificial atom-based devices in a reversible manner. The created computational connections may be created and removed according to the quantum algorithm routine to be executed.

The electronic connections used to manipulate the artificial atom-based devices may also be used as means for enabling computational interaction between at least two artificial atom-based devices. The electronic connections may connect a plurality of devices stored in the non-lattice computational arrangement in the reservoir. The electronic connections may be realized by a plurality of non-static electronic connections. By non-static electronic connections, it is understood a plurality of connections capable of selectively connecting a plurality of quantum computational units (artificial atom-based devices) and selectively removing said connection, in a reversible and reconfigurable manner.

In some embodiments, the computational manipulation of quantum computational units involves a physical manipulation thereof, such as an extraction of said units from the reservoir. This may be the case, for example, when the quantum computational units are ions. The ions in the reservoir may be indistinguishable from each other. The ions are preferably labelled in the reservoir, such that it is possible to assign an identification tag or label to the ions.

In some embodiments, the means for computationally manipulating quantum computational units is reconfigurable.

In some embodiments, the means for enabling computational interaction between at least two quantum computational units is reconfigurable.

In some embodiments, the means for computationally manipulating quantum computational units is configured to be modified according to a quantum circuit to be implemented by the quantum computational units.

It is understood that the precise selection of the means for computationally manipulating quantum computational units depends on the type of quantum computational units in the reservoir. In general, any manner of controllably manipulating for computational purposes (and, depending on the type of quantum computational units, also moving) quantum computational units may be used as means for computationally manipulating.

In some embodiments, the means for enabling computational interaction between at least two quantum computational units is configured to be modified according to a quantum circuit to be implemented by the quantum computational units.

For example, when the quantum computational units are artificial atom-based devices, the electronic connections may be reconfigurable and modified dynamically. A quantum circuit is formed with the artificial atom-based devices and the generated electronic connections defining the computational connectivity between each artificial atom-based device. Typical dynamic electronic connections are for example microwave waveguides, metal cables or any other device that allows to reversibly create electronic communication between pairs of or, in general, several artificial atom-based devices. Said connections may be temporally generated in the reservoir such that a computational connection is created between a plurality of artificial atom-based devices and after a period of time said connection between the plurality of artificial atom-based devices may be removed.

It is understood that the precise selection of computational interaction enabling means depends on the type of quantum computational units in the reservoir. In general, any means for enabling computational interaction that allows to controllably manipulate quantum computational units so that quantum computational units are brought to interaction distance to perform a desired interaction. may be used as computational interaction enabling means. The computational interaction enabling means 401 may comprise physical devices similar to the means for computationally manipulating.

In embodiments in which the quantum computational units are ions, the measurement means may comprise a photon detector, electronic connections or electromagnetic fields. The measurement means may comprise additional detectors that allow the precise measurement of the quantum property associated with each interacted quantum computational units.

In embodiments in which the quantum computational units are artificial atom-based devices, the measurement means comprises electronic connections.

It is understood that the precise selection of the measurement means depends on the type of quantum computational units in the reservoir. In general, a measurement means that allows to controllably measure the state of quantum computational units may be used as measurement means. The measurement means may be comprised by physical devices similar to the means for computationally manipulating, means for enabling computational interaction or storage means.

In some embodiments, the quantum computing system comprises a storage means. The storage means is configured for temporally computationally storing the quantum computational units after the computational interaction. The storage means allows to temporally store quantum computational units. After enabling or causing the interaction of quantum computational units, the quantum computational units may be computationally stored in the storage means for a certain period of time. Later, the computationally stored quantum computational units may be caused to interact again and/or measured. For example, after a computational interaction, the state of a quantum computational unit may be referred to as interaction state, in contrast to its state before interaction, which can be referred to as initial state. At the storage means the quantum computational unit may be stored in the interaction state.

The storage means allows to increase the complexity, and hence the depth, of the quantum algorithm routine being performed in the quantum computing system. The storage of quantum computational units may involve not only storage from the computational point of view, but also physical storage. This may be the case, for example, of ions.

When the quantum computational units are ions, the storage means may comprise electromagnetic fields and/or optical tweezers. The storage means can be understood as a temporal means for storing ions, such as means that temporally isolates one or more ions extracted from the reservoir in order to be interacted, or ions that have already interacted, or ions that have already been measured in a later point in time.

When the quantum computational units are artificial atom-based devices, in which case the reservoir of artificial atom-based devices is a surface of a substrate from which the devices cannot be physically removed or extracted, the storage means does not physically move said devices. Instead, the storage means temporally isolates a manipulated artificial atom-based device forming a quantum computational unit, in order to be interacted (for example again interacted) or measured at a later point in time. In the case of devices, computational manipulating implies manipulating the quantum property of the device, for example moving the quantum property from the device to another computationally connected device, without altering the quantum property.

In some embodiments, the storage means is the reservoir. The storage means may have the same electronic components and physical characteristics as the reservoir.

In some embodiments, the storage means can be understood as the means for computationally manipulating quantum computational units and/or the means for enabling computational interaction between at least two quantum computational units, meaning that a quantum computational unit can be temporally stored in the means for computationally manipulating and/or in the means for enabling computational interaction, which therefore effectively acts as storage means.

It is understood that the precise selection of the storage means depends on the type of quantum computational units in the reservoir. In general, any storage means that allows to controllably store quantum computational units may be used as storage means. The storage means may comprise physical devices similar to the means for computationally manipulating or means for enabling computational interaction.

Quantum computational units in the interaction state may be interacted with another quantum computational unit from the reservoir or from the storage means.

In some embodiments, the state of the retrieved quantum computational units from the storage means are mixed with the state of quantum computational units from the reservoir.

The means for enabling computational interaction between at least two quantum computational units may communicate with the storage means to temporally store interacted quantum computational units.

In embodiments in which the quantum computational units are ions, after the ions are extracted, manipulated, interacted, stored and/or measured, the ions may be disregarded. Also, after the ions are extracted, manipulated, interacted, stored and/or measured, the ions may be re-inserted in the reservoir. Said re-insertion may be in a same initial location or in a different location within the reservoir.

In embodiments in which the quantum computational units are artificial atom-based devices, after the devices are interacted, stored and/or measured, the devices may be disregarded. Also, after the devices are interacted, stored and/or measured, the devices may be re-used. The artificial atom-based devices are in the same physical location within the reservoir after measurement.

As already mentioned, the means for computationally manipulating quantum computational units and the means for enabling computational interaction may be the same means. This applies both when the quantum computational units are ions and when the quantum computational units are artificial atom-based devices.

With the proposed architecture, thanks to having a non-lattice computational arrangement of quantum computational units, the computational connections between pairs of quantum computational units are reconfigurable; and the quantum circuit formed by selected quantum computational units and their computational connections made by computationally manipulating the quantum computational units is reconfigurable; irrespective of the quantum computational units being ions or artificial atom-based devices.

A second aspect of the invention relates to a method for executing a quantum algorithm routine. The method comprises: providing a reservoir of quantum computational units, in which the quantum computational units are disposed in a non-lattice computational arrangement; computationally manipulating at least two quantum computational units of the reservoir; causing a computational interaction between at least two of the computationally manipulated quantum computational units; measuring a quantum property of at least one of the at least two quantum computational units.

The interaction implies executing a quantum computation or causing a change of a quantum property of at least one of the quantum computational units. Non-limiting examples of a quantum property of a quantum computational unit are a wavefunction defining the state of a quantum computational unit, a quantum entanglement between two or more quantum computational units, an energy level of the state of a quantum computational unit or a spin of a quantum computational unit. The quantum property may change as a consequence of the computational interaction. For example, when a computational interaction between two quantum computation units is caused, the state of one of the units is mixed with the state of the other unit.

Causing computational interaction may involve a physical displacement of the position of the quantum computational units or may not involve such physical displacement. For example, it may involve physically approaching the quantum computational units into computational interaction distance, until a change is induced in a quantum property of at least one of the quantum computational units.

In some embodiments, the quantum computational units are artificial atom-based devices. In said case, the interaction implies that electronic connections are created between said devices.

In other embodiments, the quantum computational units are ions. In said case, the interaction may imply that at least two ions are brought into proximity.

In some embodiments, the caused computational interaction is the interaction of the quantum property of one of the at least two quantum computational units with the quantum property of the other of the at least two quantum computational units.

Measuring a quantum property of a quantum computational unit may be measuring the state of the quantum computational unit. A way of measuring or determining the state of a quantum computational unit may be by collapsing the wavefunction that defines the state of said unit.

In some embodiments, said computational interaction may be performed by control gate operations. The control gate operations may perform a quantum algorithm routine.

The method of the second aspect, as disclosed in any of the former embodiments, may be carried out in the system of the first aspect, as disclosed in any of the former embodiments of the system. Therefore, certain features related to the implementation of the system in which the method can be carried out have not been repeated in the second aspect for conciseness.

In some embodiments, the disclosed system and method are implemented in a quantum computing architecture. In other embodiments, the disclosed system and method may be implemented on hybrid classical - quantum computing architecture.

In a third aspect of the invention, a computer program product is provided. The computer program product comprises instructions which, when the program is executed by at least one computing device, cause the at least one computing device to carry out the steps of the method of the second aspect.

The system and the method described as the first and second aspect, respectively, allow to reduce the number of control gates, such as SWAP gates, required in order to run a quantum algorithm routine in a quantum circuit comprising quantum computational units. In particular, the non-lattice computational arrangement of the quantum computational units in the reservoir, irrespective of the physical location of the quantum computational units in the reservoir, allows to define the computational interconnection of pairs of quantum computing units, such that a computational distance between interconnected quantum computational units is minimized. Due to this minimization, the number of control gates in the quantum circuit is reduced, and thus the computational complexity of the system executing the quantum algorithm routine is reduced, hence, improving the performance of the quantum circuit by enhancing the coherence time and minimizing gate-induced errors of the quantum computational units.

The non-lattice computational arrangement of the quantum computational units in the reservoir also allows to reconfigure the computational interconnection of quantum computational unis, thus enabling the reconfiguration of the quantum circuit, for example for executing a new quantum algorithm routine.

Additional advantages and features of the disclosure will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
FIG. 1 schematically shows parts and means of a quantum computing system according to the present disclosure.
FIG. 2A - 2B schematically show reservoirs and quantum computational units contained in reservoirs according to different embodiments of the disclosure.
FIG. 3A - 3C schematically show different computational manipulating means according to different embodiments of the disclosure.
FIG. 4A - 4C schematically show different computational interaction enabling means according to different embodiments of the disclosure.
FIG. 5A - 5C schematically show different measurement means according to different embodiments of the disclosure.
FIG. 6A - 6C schematically show different storage means according to different embodiments of the disclosure.
FIG. 7 illustrates, in a block diagram, the steps of a method for executing a quantum algorithm routine according to the disclosure.
FIG. 8A illustrates an example of quantum computational units within a reservoir and their computational connections after being manipulated, according to the embodiments of the disclosure.
FIG. 8B illustrates an example of computational connections between quantum computational units at a computational level, so that a specific algorithm can be performed, according to embodiments of the disclosure.

### DESCRIPTION OF A WAY OF CARRYING OUT THE INVENTION

The following description is not to be taken in a limiting sense but is given solely for the purpose of describing the broad principles of the disclosure. Next embodiments of the disclosure will be described by way of example, with reference to the above-mentioned drawings, showing apparatuses and results according to the disclosure.

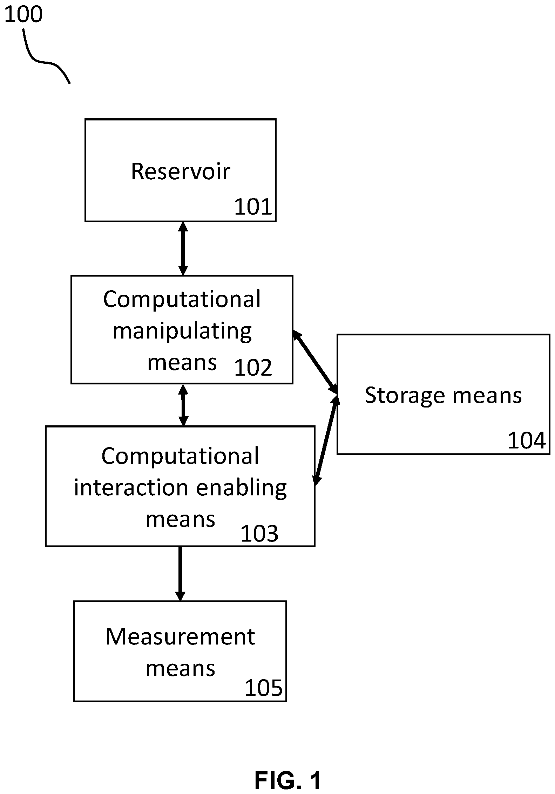

Figure 1 schematically shows a block diagram of a quantum computing system 100 according to an embodiment of the disclosure. The shown quantum computing system 100 comprises a reservoir 101, means for computationally manipulating quantum computational units 102, means for enabling computational interaction between at least two quantum computational units 103 and a measurement means 105. Optionally, the quantum computing system 100 can comprise a storage means 104. The arrows show which part(s) of the system 100 can communicate with other part(s) thereof. The reservoir 101 is a reservoir of quantum computational units. The quantum computational units are disposed in a non-lattice computational arrangement in the reservoir. Although in the shown figure the means for computationally manipulating quantum computational units 102 and means for enabling computational interaction between at least two quantum computational units 103 are represented as two different blocks or modules, in embodiments they can be implemented in a same means. The measurement means 105 is for measuring a quantum property of at least one of the at least two quantum computational units after they have interacted. The quantum computing system 100 permits an optimized execution of a quantum algorithm routine in a quantum circuit defined using quantum computational units of the reservoir. The optimization is achieved by defining the connectivity of the quantum computational units of the quantum circuit, in order to minimize the required number of gates between quantum computational units needed to execute the quantum algorithm routine.

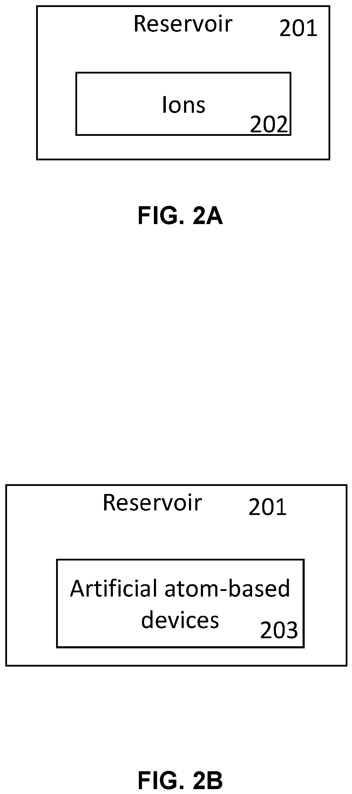

Figures 2A and 2B show examples of reservoirs 201, and their respective quantum computational units, that may be included in the quantum computing system 100. In Figure 2A, the quantum computational units comprised or included in the reservoir 201 are ions 202. In Figure 2B, the quantum computational units comprised or included in the reservoir 201 are artificial atom-based devices 203, such as superconductor-based quantum devices, spin qubit devices or quantum dot devices. The reservoir 201 may contain quantum computational units (ions or artificial atom-based devices) that comprise, each quantum computational unit, a quantum property that is capable of interacting with the quantum property of another quantum computational unit in a controlled way.

Although not shown in Figures 2A - 2B, the quantum computational units in the reservoir 201 are disposed in a non-lattice computational arrangement. In other words, no computational connections between pairs of quantum computational units in the reservoir 201 are defined. The quantum computational units in the reservoir 201 may be labeled, thus enabling to identify or know the location of each quantum computational unit in the reservoir 201. The quantum computational units in the reservoir 201 may be indistinguishable from one another.

In figure 2A, the physical location of the ions 202 in the reservoir 201 is typically disordered, meaning that the physical location of each ion 202 in the reservoir is not determined or arranged. From the computational point of view, the ions 202 in the reservoir 201 are in a non-lattice computational arrangement, meaning the computational connections between ions 202 are not defined in the reservoir 201.

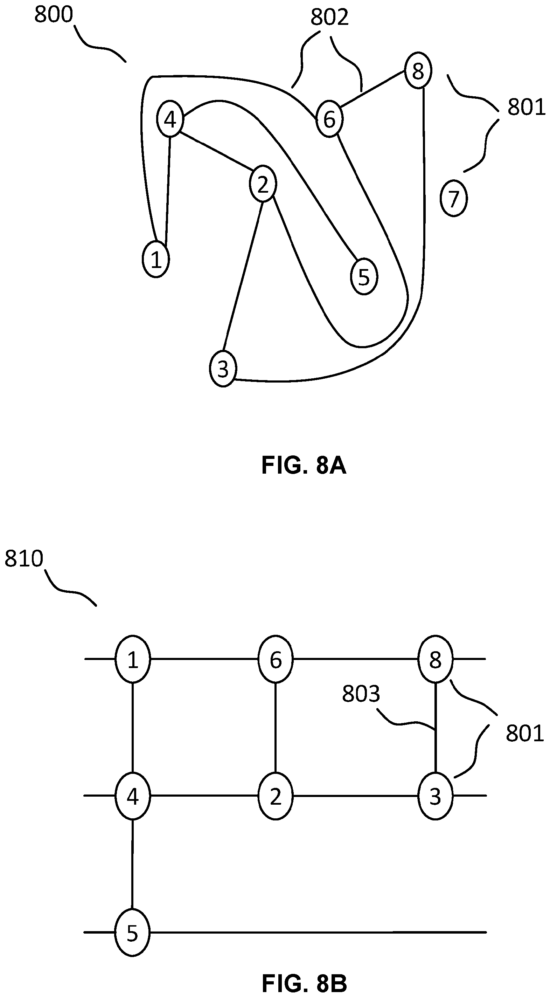

In figure 2B, the reservoir 201 of artificial atom-based devices 203 is typically the surface of a substrate, and each of the artificial atom-based devices 203 is located on the surface of the substrate on a specific physical location. From the computational point of view, artificial atom-based devices 203 in the reservoir 201 are in a non-lattice computational arrangement, meaning that computational connections between artificial atom-based devices 203 are not defined in the reservoir 201. The physical location of the artificial atom-based devices 203 in the reservoir 201 may not be organized following a specific pattern. Rather, it may be organized in a disordered manner (as shown for example in Figure 8A, disclosed later).

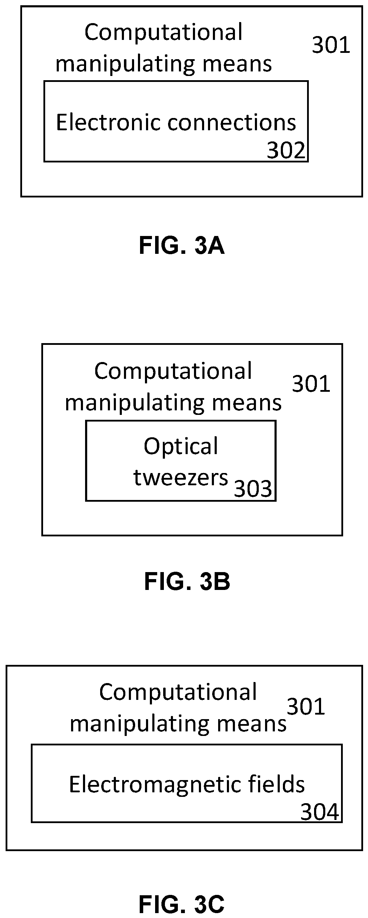

Figures 3A-3C show different embodiments of the means for computationally manipulating 301 quantum computational units.

In Figure 3A, the means for computational manipulation includes electronic connections 302. Electronic connections 302 are used preferably when the quantum computational units to be computationally manipulated are artificial atom-based devices 203. Since artificial atom-based devices 203 are usually disposed in a fixed location on the surface of a substrate, their manipulation does not involve physical manipulation, but only computational manipulation. This is made using electronic connections 302 that connect pairs of artificial atom-based devices irrespective of their physical location on the substrate. The electronic connections are capable of manipulating the quantum property of the device, for example moving it from the device to another computationally connected device, without altering the quantum property. Non-limiting examples of electronic connections 302 are transmission lines, such as microwave transmission lines, and metal contacts.

In Figure 3B, the means for computationally manipulating includes optical tweezers 303. Optical tweezers 303 can be used, for example, when the quantum computational units to be computationally manipulated are ions 202. Optical tweezers 303 allow to individually select single quantum computational units from the reservoir 201 in which there is, for example, a physically disordered plurality of ions 202. These optical tweezers are capable of manipulating the ions, for example moving them, without altering their quantum property.

In Figure 3C, the means for computationally manipulating includes electromagnetic fields 304. Electromagnetic fields 304 can be used when the quantum computational units to be computationally manipulated are sensitive to external electromagnetic fields. This is the case, for example, of ions. Electromagnetic fields 304 allow to individually select one electrically charged quantum computational unit, such as ion, from a reservoir 201 in which there is, for example, a physically disordered plurality of electrically charged quantum computational units, such as ions 202. These electromagnetic fields are capable of manipulating the ions, for example moving them, without altering their quantum property.

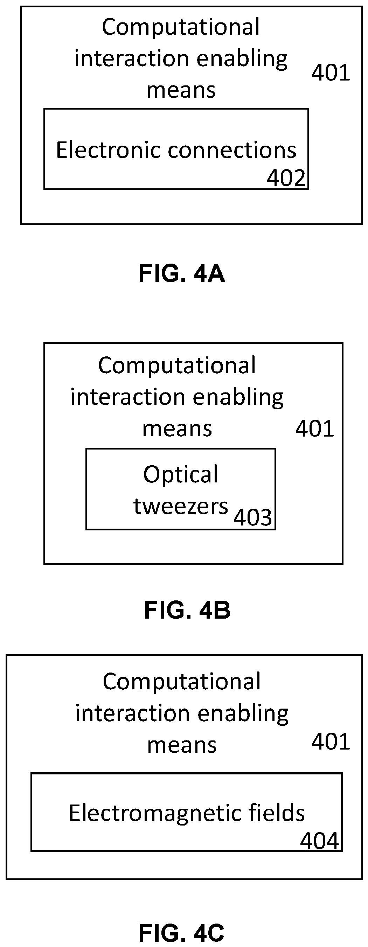

Figures 4A-4C show different embodiments of means for enabling computational interaction 401 of quantum computational units.

In Figure 4A, the computational interaction enabling means 401 includes electronic connections 402. Electronic connections 402 are used preferably when the quantum computational units to be interacted are artificial atom-based devices 203. After the artificial atom-based devices 203 have been computationally manipulated by means of electronic connections as disclosed with reference to Figure 3A, the same or other electronic connections are used to enable computational interaction between selected artificial atom-based devices 203. In the case of artificial atom-based devices 203 the enablement of interaction is made without physically displacing the artificial atom-based devices. These electronic connections are capable of altering the quantum property of at least one of the involved artificial atom-based devices. Non-limiting examples of such electronic connections 402 are transmission lines, such as microwave transmission lines and metal contacts separated by a dielectric means, which are precise tools to alter the quantum property of artificial atom-based devices.

In Figure 4B, the computational interaction enabling means 401 includes optical tweezers 403. Like in the case of means for computational manipulation, optical tweezers 403 can be used, for example, when the quantum computational units to be interacted are ions 202. For example, the same optical tweezer which has manipulated an ion (Figure 3B) can subsequently enable the computational interaction of that ion with another ion which has also been manipulated by other optical tweezer. These optical tweezers are capable of altering the quantum property of the ions.

In Figure 4C, the computational interaction enabling means 401 includes electromagnetic fields 404. Like in the case of means for computational manipulation, electromagnetic fields 404 can be used, for example, when the quantum computational units to be computationally interacted are sensitive to external electromagnetic fields. For example, the same electromagnetic fields 404 used to select and manipulate an ion (Figure 3C) can subsequently enable the computational interaction of that ion with another ion which has also been manipulated by electromagnetic fields. These electromagnetic fields are capable of altering the quantum property of the ions.

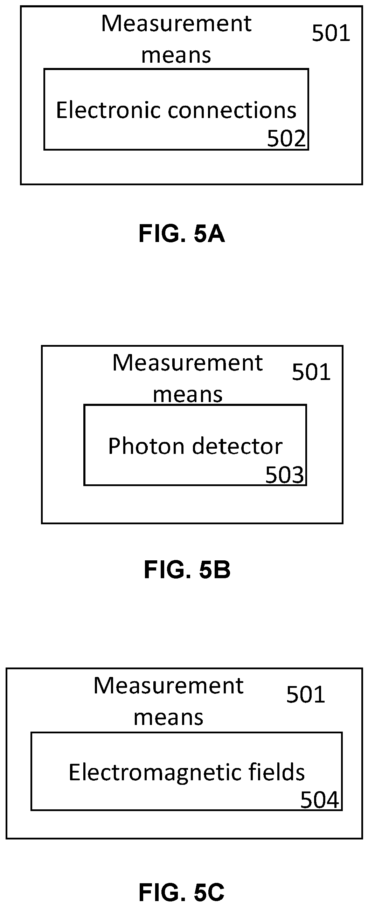

Figures 5A-5C show different embodiments of measurement means 501 for measuring a quantum property of at least one of the at least two quantum computational units that have been caused to interact with each other.

In Figure 5A, the measurement means 501 includes electronic connections 502.Electronic connections 402 are used preferably when the quantum computational units that have interacted are artificial atom-based devices 203. After the artificial atom-based devices 203 have been computationally manipulated and caused to interact by means of electronic connections as disclosed with reference to Figures 3A and 4A, the same or other electronic connections are used to measure a quantum property of one, some or all the artificial atom-based devices 203 that have interacted. Again, in the case of artificial atom-based devices 203, the stage of measuring a property is made without physically displacing the artificial atom-based devices. These electronic connections are capable of measuring the quantum property of at least one of the involved artificial atom-based devices. Non-limiting examples of such electronic connections 402 are transmission lines, such as microwave transmission lines and metal contacts separated by a dielectric means, which are precise tools to measure the quantum property of artificial atom-based devices. One example of a measurement of a quantum property of a quantum computational unit by the electronic connections 502 may be an electrical signal generated by one quantum computational unit after interacting with another quantum computational unit.

In Figure 5B, the measurement means 501 includes a photon detector 503. Photon detectors are used preferably when the quantum computational units that have interacted are ions. Photon detectors can measure, for example, a quantum property of an ion. Non-limiting examples of a measurement of a quantum property of an ion by the photon detector may be the emission of a photon by the ion, the polarization of the photon emitted by the ion, or the phase of the photon emitted by the ion.

In Figure 5C, the measurement means 501 includes electromagnetic fields 504. Electromagnetic fields are used preferably when the quantum computational units that have interacted are ions. Electromagnetic fields can measure, for example, a quantum property of an ion. Non-limiting examples of a measurement made by the electromagnetic fields may be the presence or absence of an ion (which can be considered as such as a quantum property), the energy state of the ion and the resonation frequency of the ion.

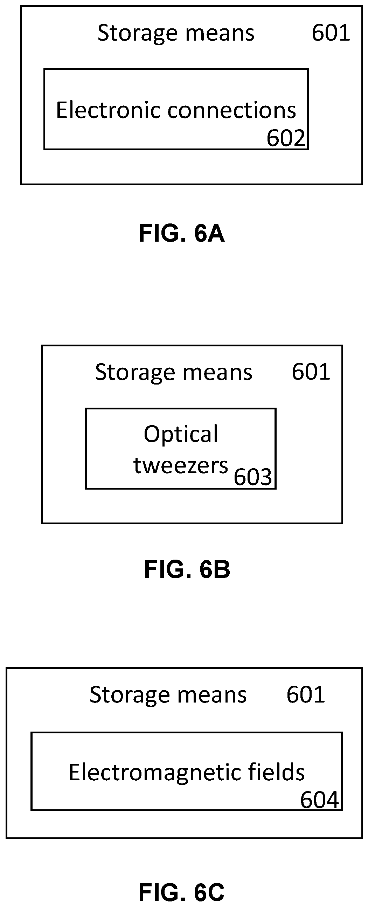

Figures 6A-6C show different embodiments of storage means 601 for computationally storing quantum computational units temporarily, typically after their computational interaction.

In Figure 6A, the storage means 601 includes electronic connections 602. Like in the case of the means for computationally manipulating, means for enabling computational interaction and/or measurement means, electronic connections 602 are used preferably when the quantum computational units are artificial atom-based devices 203. The electronic connections are capable of storing the quantum property of the device, for example isolating the quantum property from other computationally connected artificial atom-based devices. Non-limiting examples of electronic connections are transmission lines, such as microwave transmission lines, and metal contacts.

In Figure 6B, the storage means 601 includes optical tweezers 603. Like in the case of the means for computational manipulation, means for enabling computational interaction and/or measurement means, optical tweezers 603 can be used, for example, when the quantum computational units are ions 202. Optical tweezers allow to individually store single ions 202. These optical tweezers are capable of storing the ions 202, for example isolating an ion from other ions 202.

In Figure 6C, the storage means 601 includes electromagnetic fields 604. Like in the case of the means for computational manipulation, means for enabling computational interaction and/or measurement means. Electromagnetic fields 604 can be used when the quantum computational units are sensitive to external electromagnetic fields. This is the case, for example, of ions. Electromagnetic fields allow to individually store single ions, for example isolating an ion from other ions.

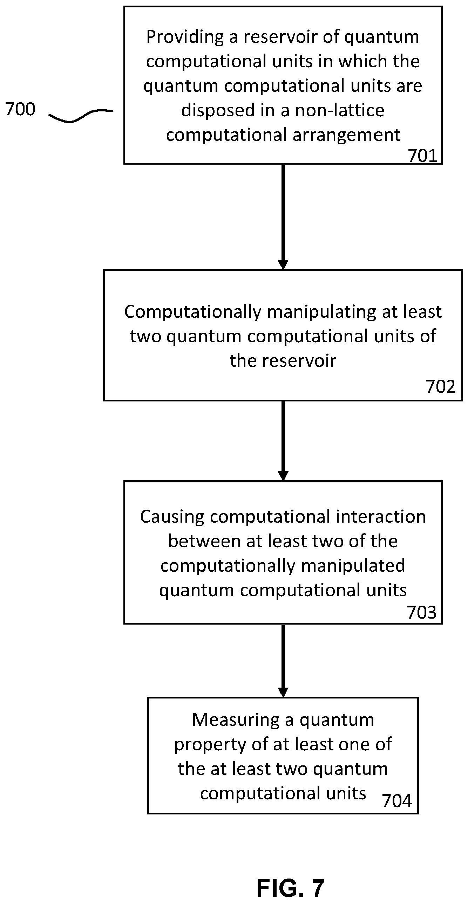

Figure 7 shows a flow chart of the different steps of a method 700 for executing a quantum algorithm routine. The method 700 can be implemented in a quantum circuit which may be in turn implemented in a quantum computational system like the one exemplified in Figures 1-6C. In this method, first 701, a reservoir of quantum computational units is provided in which the quantum computational units are disposed in a non-lattice computational arrangement. Second 702, at least two quantum computational units of the reservoir are computationally manipulated. Third 703, a computational interaction is caused between at least two of the computationally manipulated quantum computational units. For example, in the case of quantum computational units which can be physically manipulated (moved), such as ions, they may be positioned at interaction distance, so that such computational interaction can be caused. The interaction may be the interaction between the quantum property of a first quantum computational units and the quantum property of a second quantum computational units with which the first one is interacting. Fourth 704, a quantum property of at least one of the at least two quantum computational units is measured. The measured property may be the quantum property of one (or of both) the interacted quantum computational units.

Additional steps of the method 700 may comprise temporarily storing the quantum computational units at a storage means 104. Also, the quantum computational units may be discarded after measuring the quantum property or located again in the reservoir 101.

Figure 8A shows a plurality of quantum computational units 801, labelled from 1 to 8, located in a reservoir. Figure 8A also shows a plurality of computational connections 802 connecting some of the quantum computational units 801. The quantum computation units having at least one computational connection, together with the computational connections 802, form a quantum circuit. Therefore, quantum computational unit labelled as "7" does not form part of the quantum circuit because it is not computationally connected with any other quantum computational unit. In Figure 8A the physical location in the reservoir of the quantum computational units 801 is represented. In other words, in the shown example, to run a particular quantum algorithm routine, quantum computational units 1-6 and 8 are required. In this example, quantum computational units labelled as 1 - 6 and 8 have been computationally manipulated and their computational connections 802 have been created. After the manipulation, the physical location of said quantum computational units 801 may be different from their original physical location. This is, in particular, the case of ions, for which the manipulation involves both physical and computational manipulation. However, in the case of artificial atom-based devices, their physical location in the reservoir 101 before and after the computational manipulation is the same, since they are typically defined (fixed) on the surface of a substrate. The example of Figure 8A may represent artificial atom-based devices physically disposed on the surface of a substrate, in a fixed location. In this example, in order to run the particular quantum algorithm routine, the computational connections 802 established between pairs of devices (except device "7" which is not used) are electronic connections.

It is noted that, considering the physical location of the artificial atom-based devices of Figure 8A, to connect, for example, devices "1" and "6", in a classical quantum circuit the conventional approach of selecting the shortest physical distance between the involved devices would be followed. This "shortest physical distance approach" would imply computationally connecting devices "1" and "6" via the intermediary device "2". However, this connection would require the addition of one control gate, such as a SWAP gate, between devices "1" and "2" and another control gate, such as a SWAP gate, between devices "2" and "6". However, in the present disclosure, in order to minimize the number of SWAP gates in the circuit, a direct computational connection between devices "1" and "6" is created. This computational connection may be a physically longer connection, although a computationally shorter and direct connection.

Figure 8B schematically shows the connections 803 at a computational level between pairs of the involved quantum computational units of Figure 8A. In other words, while Figure 8A shows the artificial atom-based devices and the electronic connections (physical connections) which enable their computational manipulation for performing a specific quantum algorithm routine, Figure 8B shows a computational abstraction of the quantum circuit, in which it is observed that the computational distance between pairs of devices is optimized. In sum, the quantum computational units (artificial atom-based devices in this case) are physically located as shown in figure 8A, and a specific quantum algorithm routine can be performed minimizing the number of required control gates and thus optimizing the performance of the quantum circuit.

When the quantum computational units are artificial atom-based devices 203, the electronic connections 802 forming the computational connections 803 between artificial atom-based devices "3" and "8" are defined such that the computational distance between both devices is minimized, hence, reducing the number of control gates needed to communicate both artificial atom-based devices 203. This minimization can be observed in figure 8B, by the single computational connection 803 line connecting artificial atom-based devices "3" and "8" despite the physical distance between devices "3" and "8" in the representation of Figure 8A. As aid, prior art solutions would typically connect quantum computational units such that their physical connection distance is minimized , which in the example of figure 8A would imply connecting quantum computational units "3" and "8" through intermediary quantum computational units "2" and "6", requiring a higher number of control gates. The embodiment presented in figures 8A and 8B allows minimize the number of required control gates for performing the specific quantum algorithm routine.

Still referring to Figure 8B, when the quantum computational units 801 are ions 202, once the ions have been computationally manipulated (and a quantum circuit has therefore been defined) so that they are ready for a subsequent computational interaction, the physical location of each ion 202 may vary during the execution of the quantum algorithm routine. For example, at a particular point during the execution of the quantum algorithm routine, the ion 202 "5" may be at the means for enabling computational interaction 105, the ions "2" and "6" may be in the means for computationally manipulating 103 and the ions "3" and "8" may be in the storage means 104.

To run a different (new) quantum algorithm routine, the electronic connections 802 between the artificial atom-based devices may be removed and re-defined according to the different quantum algorithm routine, such that the computational connections 803 are optimized for the different quantum algorithm routine. Hence, the number of control gates required for running the different quantum algorithm routine is minimized.

Similarly, in the case of ions, after executing a quantum algorithm routine, the used ions may be taken back to the reservoir or to a temporal storage means, from which they may be taken again (manipulated) to establish and execute a new quantum algorithm routine.

Hence, the proposed system and method allows the dynamic reconfigurability of optimized quantum circuits for running different quantum algorithm routines.

In this text, the term "comprises" and its derivations -such as "comprising", etc.- should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art -for example, as regards the choice of materials, dimensions, components, configuration, etc.-, within the general scope of the disclosure as defined in the claims.

## Claims

1. A quantum computing system (100) comprising:
a reservoir (101, 201) of quantum computational units (202, 203, 801), wherein the quantum computational units (202, 203, 801) are disposed in a non-lattice computational arrangement,
means for computationally manipulating quantum computational units (202, 203, 801) of the reservoir (101, 201),
means for enabling computational interaction between at least two quantum computational units (202, 203, 801) computationally manipulated, and
a measurement means (105, 601) for measuring a quantum property of at least one of the at least two quantum computational units (202, 203, 801) after said computational interaction.

2. The quantum computing system (100) according to claim 1, wherein the reservoir (101, 201) of quantum computational units (202, 203, 801) is an ion trap or a surface of a substrate, such as a surface of a semiconductor or sapphire substrate.

3. The quantum computing system (100) according to claim 2, wherein:
when the reservoir (101, 201) of quantum computational units (202, 203, 801) is an ion trap, the quantum computational units in the reservoir (101, 201) are ions (202);
when the reservoir (101, 201) of quantum computational units (202, 203, 801) is a surface of a substrate, the quantum computational units in the reservoir (101, 201) are artificial atom-based devices (203), such as a superconductor-based quantum device, a spin qubit device or a quantum dot device.

4. The quantum computing system (100) according to any of the preceding claims, wherein the means for computationally manipulating quantum computational units (202, 203, 801) and the means for enabling computational interaction are the same means.

5. The quantum computing system (100) according to claim 3, wherein:
when the quantum computational units (202, 203, 801) are ions (202):
the means for computationally manipulating quantum computational units (202, 203, 801) comprises at least one of: electromagnetic fields (304, 404) and optical tweezers (303, 403); and
the means for enabling computational interaction between at least two quantum computational units (202, 203, 801) comprises at least one of: electromagnetic fields (304, 404) and optical tweezers (303, 403);
when the quantum computational units (202, 203, 801) are artificial atom-based devices (203):
the means (102, 301) for computationally manipulating quantum computational units (202, 203, 801) comprises electronic connections (302, 402); and
the means (103, 401) for enabling computational interaction between at least two quantum computational units (202, 203, 801) comprises electronic connections (302, 402).

6. The quantum computing system (100) according to any of the preceding claims, wherein the means for computationally manipulating quantum computational units (202, 203, 801) and the means for enabling computational interaction between at least two quantum computational units (202, 203, 801) are reconfigurable.

7. The quantum computing system (100) according to any of the preceding claims, wherein the means for computationally manipulating quantum computational units (202, 203, 801) and the means for enabling computational interaction between at least two quantum computational units (202, 203, 801) are configured to be modified according to a quantum circuit (810) to be implemented by the quantum computational units (202, 203, 801).

8. The quantum computing system (100) according to any of the preceding claims, wherein the quantum computational units (202, 203, 801) in the non-lattice computational arrangement in the reservoir (101, 201) are computationally disconnected from one another.

9. The quantum computing system (100) according to any of the preceding claims, further comprising a storage means (104, 501) configured for temporally computationally storing quantum computational units (202, 203, 801) after the computational interaction.

10. The quantum computing system (100) according to claim 9, wherein the storage means (104, 501) is the reservoir (101, 201).

11. The quantum computing system (100) according to any of the preceding claims, wherein the means for enabling computational interaction is configured for performing single body gate operations and/or two-body gate operations on the at least two of the plurality of quantum computational units (202, 203, 801).

12. The quantum computing system (100) according to any of the preceding claims, wherein:
when the quantum computational units (202, 203, 801) are ions (202), the measurement means (105, 601) comprises a photon detector (603) and/or electromagnetic fields (604);
when the quantum computational units (202, 203, 801) are artificial atom-based devices (203), the measurement means (105, 601) comprises electronic connections (602).

13. A method for executing a quantum algorithm routine, comprising:
providing a reservoir (101, 201) of quantum computational units (202, 203, 801), in which the quantum computational units (202, 203, 801) are disposed in a non-lattice computational arrangement,
computationally manipulating at least two quantum computational units (202, 203, 801) of the reservoir (101, 201),
causing a computational interaction between at least two of the computationally manipulated quantum computational units (202, 203, 801),
measuring a quantum property of at least one of the at least two quantum computational units (202, 203, 801).

14. The method according to claim 13, wherein the caused computational interaction is the interaction of the quantum property of one of the at least two quantum computational units (202, 203, 801) with the quantum property of the other of the at least two quantum computational units (202, 203, 801).

15. A computer program product that has instructions which, when the program is executed by at least one computing device, cause the at least one computing device to carry out the steps of the method of any one of claims 13 - 14.
